# EUROPEAN PATENT APPLICATION

(11) **EP 3 825 042 A1**
(43) Date of publication of application: **26.05.2021**
(21) Application number: 20207328.4
(22) Date of filing: 12.11.2020
(51) Int. Cl.: B22F 10/20, B22F 10/66, B29C 64/153, B33Y 10/00, B33Y 40/20, B29C 64/188

(54) **ADDITIVE MANUFACTURED COMPONENTS INCLUDING INTEGRALLY FORMED PASSAGES, CHANNELS, AND CONDUITS, AND METHODS OF FORMING SAME**

(30) Priority: 25.11.2019 US 201916693854
(71) Applicant: General Electric Company, Schenectady, NY 12345 (US)
(72) Inventor: SNIDER, Zachary John, Greenville, SC South Carolina 29615 (US); SODEN, Michael Scott, Greenville, SC South Carolina 29615 (US); BERRY, Michael Robert, Greenville, SC South Carolina 29615 (US)
(74) Representative: Openshaw & Co.

(57) **Abstract**

Additively manufactured components (200) including unitary bodies (102, 202, 302). The component (200) may include a unitary body (102, 202, 302) having a component section (104, 204, 304). The component section (104, 204, 304) may include at least one passage (108) extending at least partially through the component section (104, 204, 304). The unitary body (102, 202, 302) may also include a supplemental section (206) formed integral with the component section (104, 204, 304). The supplemental section (206) may be disposed over the passage(s) of the component section (104, 204, 304) and may include a channel (118, 218A, 2018B) extending at least partially through the supplemental section (206). The channel (118, 218A, 2018B) may be in fluid communication with the passage(s) of the component section (104, 204, 304). Additionally, the unitary body (102, 202, 302) may include a transition conduit (124, 224A) positioned within the component section (104, 204, 304) and the supplemental section (206). The transition conduit (124, 224A) may extend between the passage(s) of the component section (104, 204, 304) and the channel (118, 218A, 2018B) of the supplemental section (206) to fluidly couple the passage(s) (108) and the channel (118, 218A, 2018B).

## Description

### BACKGROUND

The disclosure relates generally to additive manufactured components, and more particularly, to additively manufactured components including integrally formed passages, channels, and conduits, and methods of forming the same.

Components or parts for various machines and mechanical systems may be built using additive manufacturing systems. Additive manufacturing systems may build such components by continuously layering powder material in predetermined areas and performing a material transformation process, such as sintering or melting, on the powder material. The material transformation process may alter the physical state of the powder material from a granular composition to a solid material to build the component. The components built using the additive manufacturing systems have nearly identical physical attributes as conventional components typically made by performing machining processes (e.g., material removal processes) on stock material. However, because of the advantageous process, the components formed using additive manufacturing may include unique features and/or complex geometries that are difficult or impossible to obtain and/or build using conventional machining processes.

However, the capability of being able to easily form unique features and/or complex geometries results in new and/or additional manufacturing difficulties or issues. For example, when conduits or channels are exposed and/or formed to extend to a surface of the component, post-build processing performed on the additively manufactured component may create problems for the intended use of those conduits or channels. That is, when removing excess build material and/or resurfacing (e.g., polishing/planing) a surface of the component that includes an opening for a conduit or channel, undesirable burrs may form on the surface and/or may extend into the opening. The burrs formed during the post-build process may obstruct, block, or otherwise clog the conduit or channel formed in the component, rendering the feature inoperable for its intended purpose. While burr removal processes may be performed on the component to remove the formed burs, the tool used to remove the burrs may reshape, reconfigure, and/or otherwise damage the opening and/or a portion of the conduit or channel. This is especially common where the opening or conduit is small in size or dimension, and/or where the conduit or channel does not extend directly perpendicular (e.g., angled conduit) to the surface including the opening.

### BRIEF DESCRIPTION

A first aspect of the disclosure provides a component including a unitary body including: a component section, the component section including: at least one passage extending at least partially through the component section, the at least one passage including an opening having a first dimension; a supplemental section formed integral with the component section, the supplemental section disposed over the at least one passage of the component section and including: a channel extending at least partially through the supplemental section, the channel in fluid communication with the at least one passage of the component section; and a transition conduit positioned within the component section and the supplemental section, the transition conduit extending between the at least one passage of the component section and the channel of the supplemental section to fluidly couple the at least one passage and the channel.

A second aspect of the disclosure provides a method including additively manufacturing a unitary body of a component, the unitary body including: a component section, the component section including at least one passage extending at least partially through the component section, the at least one passage including an opening having a first dimension; a supplemental section formed integral with the component section, the supplemental section disposed over the at least one passage of the component section and including a channel extending at least partially through the supplemental section, the channel in fluid communication with the at least one passage of the component section; and a transition conduit positioned within the component section and the supplemental section, the transition conduit extending between the at least one passage of the component section and the channel of the supplemental section to fluidly couple the at least one passage and the channel; performing at least one post-build process on the component including the unitary body; and removing the supplemental section from the component section of the unitary body to expose a portion of the transition conduit and the at least one passage of the component section.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows an exploded, perspective view of a component including a component section and a supplemental section, according to embodiments of the disclosure.
FIG. 2 shows a front view of the component including the component section and the supplemental section of FIG. 1, according to embodiments of the disclosure.
FIG. 3 shows a front cross-sectional view of the component of FIG. 2 taken along line CS-CS, according to embodiments of the disclosure.
FIG. 4 shows a front cross-sectional view of the component of FIG. 2 with the supplemental section removed from the component section, according to embodiments of the disclosure.
FIG. 5 shows an enlarged view of a portion of the component section of FIG. 4 including burs, according to embodiments of the disclosure.
FIG. 6 shows an enlarged view of the portion of the component section of FIG. 4 with the burrs removed, according to embodiments of the disclosure.
FIG. 7 shows a front cross-sectional view of a component including a component section and a supplemental section, according to additional embodiments of the disclosure.
FIG. 8 shows a front cross-sectional view of the component of FIG. 7 with the supplemental section removed from the component section, according to additional embodiments of the disclosure.
FIG. 9 shows a front cross-sectional view of a component including a component section and a supplemental section, according to further embodiments of the disclosure.
FIG. 10 shows a front cross-sectional view of the component of FIG. 9 with the supplemental section removed from the component section, according to further embodiments of the disclosure.
FIGs. 11 and 12 show front cross-sectional views of a component including a component section, a supplemental section, and a plurality of passages extending therein, according to embodiments of the disclosure.
FIG. 13 shows a front cross-sectional view of a component including a component section, a supplemental section, a plurality of passages extending therein, and a manifold, according to embodiments of the disclosure.
FIG. 14 shows a front view of the component including the component section and a plurality of supplemental sections, according to embodiments of the disclosure.
FIG. 15 shows a flow chart of an example process for forming an additive manufactured component including a component section and a supplemental section, according to embodiments of the disclosure.
FIG. 16 shows a block diagram of an additive manufacturing system and process including a non-transitory computer readable storage medium storing code representative of a component including a component section and a supplemental section, according to embodiments of the disclosure.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION

As an initial matter, in order to clearly describe the current disclosure it will become necessary to select certain terminology when referring to and describing relevant machine components within the disclosure. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

The following disclosure relates generally to additive manufactured components, and more particularly, to additively manufactured components including integrally formed passages, channels, and conduits, and methods of forming the same.

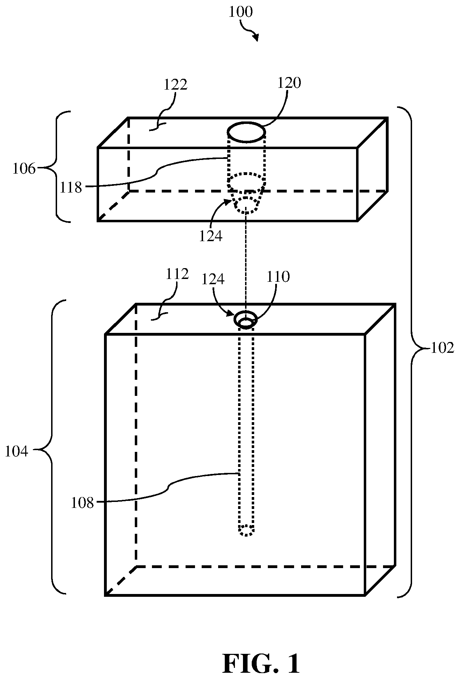

These and other embodiments are discussed below with reference to FIGs. 1-16. However, those skilled in the art will readily appreciate that the detailed description given herein with respect to these Figures is for explanatory purposes only and should not be construed as limiting.

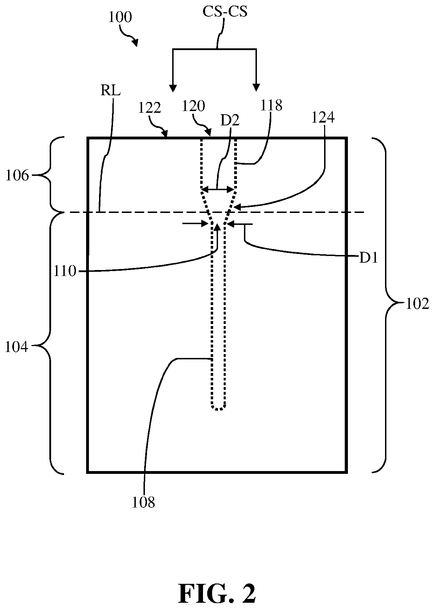

FIGs. 1 and 2 shows various views of a component 100 including a unitary body 102. Specifically, FIG. 1 shows a perspective, exploded view of component 100 including unitary body 102, and FIG. 2 shows a front view of component 100 including unitary body 102. Component 100 including unitary body 102 may be considered an "intermediately" formed component and/or a component that may be in an intermediate stage of processing. As such, and as discussed herein, component 100 may undergo additional post-build processes performed before and/or after the final configuration of component 100 (e.g., a component section) may be utilized for its intended purpose.

In the non-limiting example discussed herein, component 100 may include and/or be formed as a unitary body 102 such that component 100 is a single, continuous, and/or non-disjointed component or part. In the non-limiting examples shown in FIGs. 1-14, because component 100 includes unitary body 102, turbine shroud 100 may not require the joining, coupling, and/or assembling of various parts to completely form component 100. Rather, once single, continuous, and/or non-disjointed unitary body 102 for component 100 is built, as discussed herein, unitary body 102 of component 100 may include all desired features therein which may be utilized in the intended purpose for the final configuration of component 100 (e.g., a component portion).

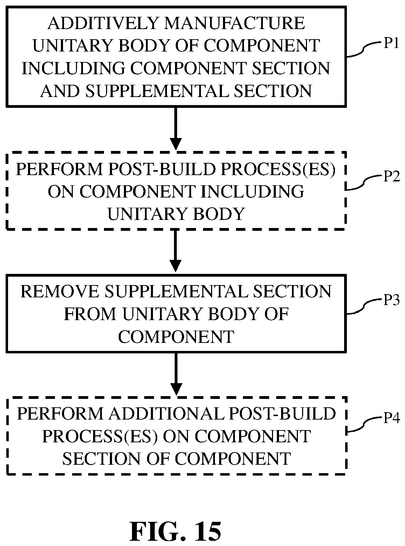

In the non-limiting example, unitary body 102 of component 100, and the various components and/or features of component 100, may be formed using any suitable additive manufacturing process and/or method. For example, component 100 including unitary body 102 may be formed by direct metal laser melting (DMLM) (also referred to as selective laser melting (SLM)), direct metal laser sintering (DMLS), electronic beam melting (EBM), stereolithography (SLA), binder jetting, or any other suitable additive manufacturing process. As such, unitary body 102 of component 100, and the various components and/or features integrally formed on and/or in unitary body 102 of component 100, may be formed during a single, additive manufacturing process and/or method. Additionally, component 100, and more specifically unitary body 102, may be formed from any suitable material that may undergo the additive manufacturing process(es) performed by an additive manufacturing system (AMS) *(see,* FIG. 15). In non-limiting examples, unitary body 102 of component 100 may be formed from thermoplastics, metals, metal-alloys, ceramics, glass, and other suitable materials.

As shown in FIGs. 1 and 2, unitary body 102 of component 100 may include two distinct portions and/or sections. That is, although unitary body 102 is formed as a single, continuous component or part, unitary body 102 of component 100 may be formed as two distinction sections. In the non-limiting examples discussed herein, unitary body 102 may include a component section 104 and at least one supplemental section 106, respectively. As shown in FIG. 2, component section 104 and supplemental section 106 may be integrally formed to form unitary body 102 of component 100. Component section 104 and supplemental section 106 may be integrally formed using the (single) additive manufacturing process and/or AMS (*see,* FIG. 15). As discussed herein, component section 104 and supplemental section 106 may be separated from one another after formation, via the (single) additive manufacturing process, and component section 104 may subsequently be utilized for its intended purpose, while supplemental section 106 may be discarded. As discussed herein, component section 104 of component 100 may represent the "final" configuration, geometry, part, and/or assembly manufactured by the AMS that may be used by a component, apparatus, and/or system for an intended purpose.

As a result of being formed from unitary body 102, and as discussed herein, component 100 may include various integrally formed features, components, and/or segments that may provide a desired function and/or operation for the final configuration of component 100 (e.g., component section 104). That is, and because component 100 includes unitary body 102 formed using any suitable (single) additive manufacturing process and/or method, the features, components, and/or segments of component 100 may be formed integrally with unitary body 102. The terms "integral features" or "integrally formed features" may refer to features formed on or in unitary body 102 during the (single) additive manufacturing process, features formed from the same material as unitary body 102, and/or features formed on or in unitary body 102 such that the features are not fabricated using distinct process(es) and/or raw material components that are separately and subsequently built, joined, coupled, and/or assembled on or in unitary body 102 of component 100. Additionally, the features formed in unitary body 102 of component 100 may be specific to the operation and/or function of component section 104 of component 100.

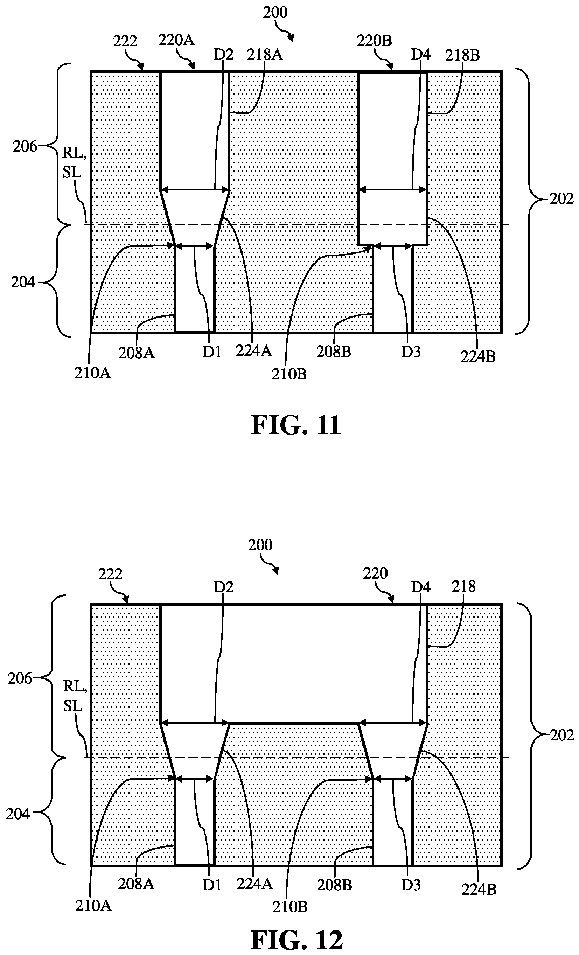

As shown in FIGs. 1 and 2, component 100 may include at least one feature formed in unitary body 102. More specifically, component 100 may include at least on feature formed at least partially in, on, and/or through component section 104 of unitary body 102. In the non-limiting example shown in FIGs. 1 and 2, the feature(s) formed in unitary body 102, and more specifically component section 104 may be at least one passage 108. Passage 108 may be formed at least partially in and/or may extend at least partially through component section 104 of unitary body 102. In the non-limiting example, passage 108 may extend only partially through component section 104, and may be formed as a recess. In other non-limiting examples (*see e.g.,* FIG. 12), passage 108 may extend completely though unitary body 102 and/or component section 104, and may include two openings that are exposed and/or formed on a surface of component section 104 of component 100.

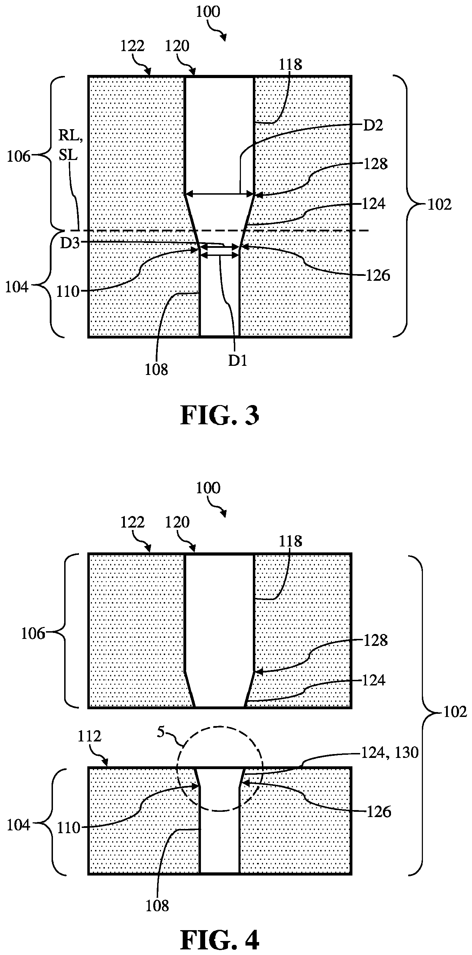

Passage 108, as shown in FIGs. 1 and 2, may include an opening 110. That is, passage 108 may be at least partially defined by opening 110, and/or opening 110 may be in fluid communication with passage 108. Opening 110 may have a first, predetermined dimension (D1). For example, where opening 110 is substantially circular in shape, opening 110 of passage 108 may include a first, predetermined dimension (D1) that corresponds to the circumference of opening 110. As shown in the exploded view of FIG. 1, and briefly turning to FIG. 4, passage 108 and/or opening 110 may be exposed and/or formed adjacent a "finished" surface 112 formed on component section 104, after supplemental section 106 is removed, as discussed herein. Prior to the removal of supplemental section 106, and as discussed herein, "finished" surface 112 may be considered a reference, artificial, and/or anticipated surface of component section 104 of component 100 that may be formed/disposed below, and/or "covered" by supplemental section 106.

It is understood that the shape and/or geometry of passage 108 and/or opening 110 shown herein is illustrative. As such, passage 108 and/or opening 110 may include any geometry and/or size that may correspond to an intended function and/or operation for component section 104. Additionally, although shown as being uniform and/or substantially similar in shape as the remainder of passage 108 extending at least partially within component section 104, it is understood that opening 110 may vary in shape and/or dimension from passage 108. Furthermore, the number of passages 108/openings 110 formed in component section 104 of unitary body 102 shown herein may also be illustrative, and unitary body 102 of component 100 may include more or less passages 108 and/or openings 110 than those shown and discussed herein.

As discussed herein, unitary body 102 of component 100 may also include supplemental section 106. Supplemental section 106 may be formed integral with component section 104 of unitary body 102 for component 100. That is, and although shown as exploded or separate from component section 104 in FIG. 1, supplemental section 106 may be formed integral with, as a part of, and/or unified with component section 104 of unitary body 102 (*see,* FIG. 2). The dashed line (DL) shown in FIG. 2 may represent a location within component 100 that separates or distinguishes component section 104 and supplemental section 106. In the non-limiting example shown in FIGs. 1 and 2, supplemental section 106 may be formed integral with at least a portion of "finished" surface 112 of component section 104. Additionally, and as discussed herein, the removal of supplemental section 106 from component section 104 of unitary body 102 may substantially define and/or expose "finished" surface 112, and passage 108/opening 110 (e.g., features) formed in component section 104 of unitary body 102. Although shown as being formed on and/or integral with "finished" surface 112 of component section 104, it is understood that supplemental section 106 may be formed on other portions or surfaces of component section 104 (*see,* FIG. 12), and/or between a build surface 20 of a build plate 18 and component section 104 of unitary body 102 (not shown), where component 100 is built directly on a build plate of an additive manufacturing system.

In the non-limiting example shown in FIGs. 1 and 2, supplemental section 106 may include a geometry similar to component section 104. That is, supplemental section 106 may include a geometry, shape, and/or dimensions (e.g., width, depth) similar or substantially identical to a portion of component section 104 that includes passage 108 and/or opening 110. As a result, supplemental section 106 may cover and/or may be disposed over component section 104 of unitary body 102. More specifically, supplemental section 106 may be disposed over, and/or may define "finished" surface 112, and may substantially cover, be positioned adjacent to, and/or may be disposed over passage 108/opening 110 (e.g., features) formed in component section 104. In another non-limiting example (not shown), supplemental section 106 may include a geometry, shape, and/or dimensions (e.g., width, depth) substantially distinct from component section 104 of unitary body 102. In this non-limiting example, supplemental section 106 may be sized and/or may include a geometry that may only cover and/or be disposed over a portion of component section 104 that includes the features (e.g., passage 108/opening 110) formed therein. As such, a distinct portion of component section 104, and more specifically a portion of "finished" surface 112 of component section 104, may be uncovered by supplemental section 106 and may be completely exposed during post-build processing, as discussed herein.

As shown in FIGs. 1 and 2, supplemental section 106 may also include at least one channel 118. More specifically, channel 118 may be formed in and/or may extend at least partially through supplemental section 106. Channel 118 of supplemental section 106 may be in fluid communication with passage 108/opening 110 (e.g., features) formed in component section 104 of unitary body 102. Channel 118 may allow a fluid (e.g., pressurized air) to flow through passage 108 formed in component section 104 of unitary body 102 in order to remove any unsintered, powder material and/or particles that may undesirably remain in the passage 108 of component section 104, after the formation of component 100. Additionally, or alternatively, channel 118 may allow for a testing fluid to flow through passage 108 formed in component section 104 to test the operational parameters and/or characteristics of passage 108. For example, where passage 108 may be formed as a cooling passage in component 100, channel 118 of supplemental section 106 may allow for a test fluid to be provided to passage 108 to ensure that a test/actual flow rate and/or flow pressure meets the desired, operational flow rate and/or flow pressure.

In the non-limiting example shown in FIGs. 1 and 2, channel 118 of supplemental section 106 may also include an opening 120. Specifically, channel 118 extending at least partially through supplemental section 106 may include opening 120 formed in, on, and/or through surface 122 of unitary body 102. As a result of forming opening 120 of channel 118 on surface 122 of unitary body 102, channel 118 may be exposed in component 100. Additionally, and because channel 118 is in fluid communication with passage 108/opening 110 extending at least partially through component section 104, forming opening 120 of channel 118 on surface 122 of unitary body 102 may also expose passage 108 in the "intermediately" formed component that is component 100.

In the non-limiting example shown in FIGs. 1 and 2, unitary body 102 of component 100 may also include a transition conduit 124. Transition conduit 124 may be positioned within component section 104 and supplemental section 106. More specifically, transition conduit 124 may be positioned within, may be formed/built within, and/or may be disposed within at least a portion of both component section 104 and supplemental section 106 of unitary body 102. In the non-limiting example, transition conduit 124 may extend between the transition between component section 104 and supplemental section 106, as defined by the dashed line (DL) shown in FIG. 2, and as discussed herein. Transition conduit 124 may be integrally formed using the (single) additive manufacturing process and/or AMS within unitary body 102, and/or may be formed during the same additive manufacturing process and/or using the same AMS that may form the features (e.g., passage 108, channel 118) within unitary body 102, as discussed herein. As shown in FIGs. 1 and 2, and as discussed herein, transition conduit 124 may include a second dimension (D2) that is larger than the first dimension (D1) of opening 110 of passage 108 extending at least partially through component section 104.

FIG. 3 shows a cross-sectional front view of a portion of unitary body 102 taken along line CS-CS in FIG. 2. As shown in FIG. 3, and with continued reference to FIGs. 1 and 2, transition conduit 124 of unitary body 102 may also extend between passage 108 of component section 104 and channel 118 of supplemental section 106 As such, transition conduit 124 may fluidly couple passage 108 extending through component section 104 and channel 118 extending through supplemental section 106 of unitary body 102. In the non-limiting example shown in FIGs. 1-3, transition conduit 124 may also be frusto-conical in shape and/or geometry. More specifically, transition conduit 124 may include a first end 126 (*see,* FIG. 3) positioned directly adjacent and in direct fluid communication with opening 110 of passage 108 formed in component section 104, and a second end 128 (*see,* FIG. 3) positioned opposite first end 126. Second end 128 may be positioned directly adjacent and in direct fluid communication with channel 118 positioned in supplemental section 106. In the non-limiting example, first end 126 of transition conduit 124 may be formed, built, and/or defined with component section 104 of unitary body 102, while second end 128 of transition conduit 124 may be formed, built, and/or defined with supplemental section 106 of unitary body 102. First end 126 of transition conduit 124 may include or may have a dimension (e.g., third dimension) (D3) that may be (slightly) larger the first dimension (D1) of opening 110 of passage 108. Second end 128 of transition conduit 124 may include the second dimension (D2) that is larger than the first dimension (D1) of opening 110 of passage 108 and, larger than the third dimension (D3) of first end 126. Additionally as shown in FIG. 3, the second dimension (D2) may be substantially similar to a dimension of channel 118 of supplemental section 106 of unitary body 102. As such, and based on the frusto-conical shape of transition conduit 124, the entirety of transition conduit 124 may include a larger dimension (e.g., D2, D3) than opening 110 of passage 108, and the difference in dimensions may increase as the distance between opening 110 and second end 128 of transition conduit 124 increases.

The formation and/or positioning of transition conduit 126 within unitary body 102 may prevent, eliminate, and/or reduce undesirable results and/or effects imparted on component 100 after performing post-build processes on unitary body 102 and is various sections/features. That is, once component 100 is additively manufactured to include component section 104, supplemental section 106, and the various features (e.g., passage 108, channel 118, and so on) therein, unitary body 102 of component 100 may undergo various post-build process(es). A post-build process may include, for example, the removal of supplemental section 106 from component section 104 of unitary body 102. As discussed herein, supplemental section 106 may be removed from component section 104, such that component section 104 of component 100 may represent the "final" configuration that may be used by a component, apparatus, and/or system for an intended purpose. As shown in FIGs. 3 and 4, supplemental section 106 may be removed from component section 104 at the dashed line (DL), also identified in the figures as separation line (SL) (*see,* FIG. 3). As shown in FIG. 3, separation line (SL) may pass through transition conduit 124 extending between and fluidly coupling passage 108 of component section 104 and channel 118 of supplemental section 106. Additionally, and as discussed herein with respect to FIG. 2, the dash reference line/separation line (SL) may identify where component section 104 ends within unitary body 102 and/or where supplemental section 106 begins in unitary body 102. As such, and as discussed herein, supplemental section 106 may be completely removed from component section 104, along separation line (SL), during the post-build removal process.

Supplemental section 106 may be removed from component section 104 using any suitable material removal technique and/or process. For example, unitary body 102 of component 100 may be machined (e.g., cut, milled, and so on) along separation line (SL) to remove supplemental section 106 completely from component section 104. In another non-limiting example, unitary body 102 of component 100 may undergo an electrical discharge machining process to remove supplemental section 106 from component section 104 along separation line (SL). As a result of removing supplemental section 106 from component section 104, "finished" surface 112 of component section 104 may be exposed, formed, and/or defined. Additionally, the remaining portion 130 of transition conduit 124, including first end 126, as well as passage 108 and opening 110 of component section 104, may be exposed via "finished" surface 112.

Supplemental section 106 of unitary body 102 for component 100 may be formed by the AMS to include substantially similar or distinct predetermined build characteristics from the predetermined build characteristics of component section 104 of unitary body 102. In a non-limiting example wherein the predetermined build characteristics differ between supplemental section 106 and component section 104, the material density or material porosity of supplemental section 106 may differ from the material density or material porosity of component section 104. More specifically, the material density or material porosity of supplemental section 106 may be less than the material density or material porosity of component section 104. The reduced material density or material porosity of supplemental section 106 may make it easier to remove supplemental section 106 from component section 104. In the non-limiting example discussed herein with respect to FIGs. 1-4, supplemental section 106 may be removed from component section 104 at separation line (SL), which may also coincide with the dashed line (DL) that distinguishes between supplemental section 106 and component section 104. As discussed herein, component section 104 may be free of supplemental section 106, and thus may not include any portion of supplemental section 106 that includes the reduced density or porosity. The AMS may build supplemental section 106 to include distinct predetermined build characteristics from those of component section 104 by, for example, adjusting a strength or power output for an energy emitting device used to form supplemental section 106 and component section 104, and/or a speed for the energy emitting device used to form supplemental section 106 and component section 104.

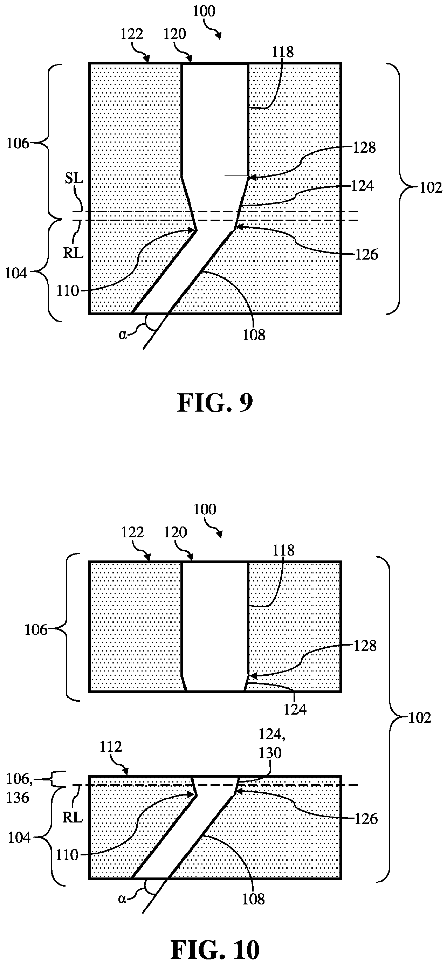

In other non-limiting examples (*see,* FIGs. 9 and 10), the separation line (SL) in which supplemental section 106 is removed from component section 104 may not coincide with the dashed line (DL) that distinguishes between supplemental section 106 and component section 104. As such, a portion of component section 104 may be removed with supplemental section 106 and/or a portion of supplemental section 106 may remain with component section 104. In these examples, component section 104 and supplemental section 106 may include similar predetermined build characteristics.

In a non-limiting example, once supplemental section 106 is removed from component section 104, component section 104 of component 100 may be implemented, installed, and/or utilized for its intended purposed. That is, component section 104 including remaining portion 130 of transition conduit 124, passage 108, and opening 110, may be considered a finished, final, and/or ready-to-use component that may be utilized for its intended purposed and/or used within an intended apparatus, without additional post-build processing.

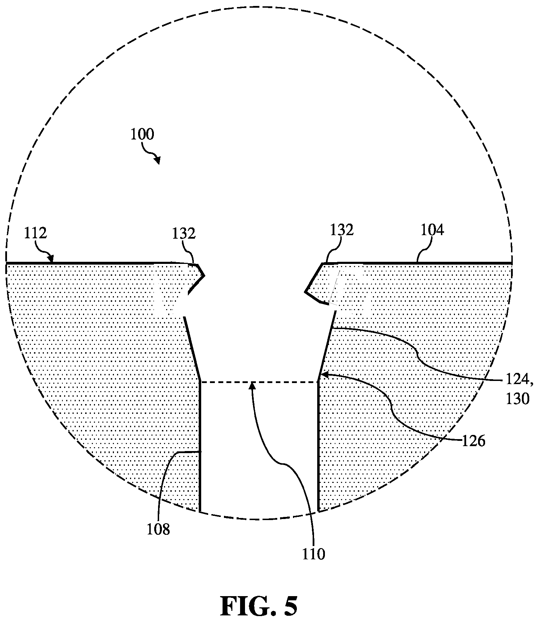

Turning to FIG. 5, an enlarged portion of component section 104 of FIG. 4 is shown after performing a machining process on unitary body 102 to remove supplemental section 106. In the non-limiting example, burrs 132 may form along "finished" surface 112 and/or may extending into transition conduit 124. That is, performing the machining process to remove supplemental section 106 from component section 104 may result in excess material or burrs 132 being formed, pushed inward, and/or extending into transition conduit 124 from "finished" surface 112. As shown in the non-limiting example, burrs 132 extending into the transition conduit 124 may not close, obstruct, and/or otherwise block passage 108 (e.g., allowing fluid to flow in and/or out). That is, even with the inclusion of burrs 132, passage 108 of component section 104 may still be exposed and/or capable of receiving and/or discharging a fluid through opening 110 and/or transition conduit 124 including burrs 132. Passage 108 of component section 104 may not be obstructed by burrs 132 as a result of transition conduit 124, and more specifically remaining portion 130 of transition conduit 124 formed directly adjacent "finished" surface 112, including a larger dimension than the first dimension (D1) of opening 110 and/or passage 108. As such, passage 108 of component section 104 may be utilized for its intended purpose with no or a negligible decrease in operation or operational parameters.

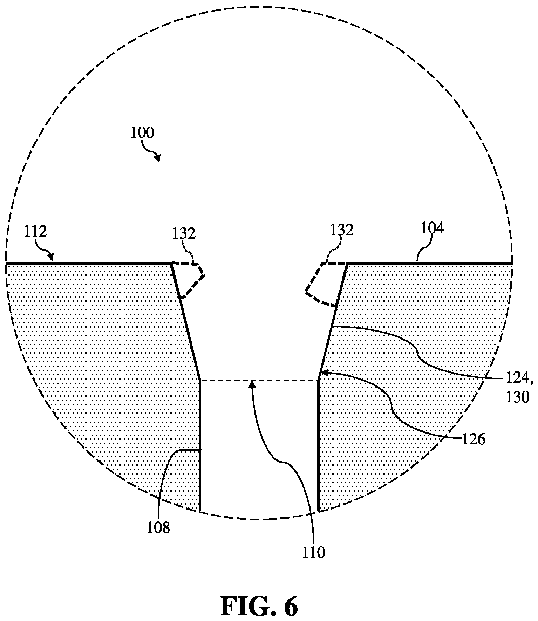

In another non-limiting example, component section 104 of unitary body 102, substantially free of supplemental section 106, may go through additional post-build process(es). For example, and with continued reference to FIG. 5, it may be desired to remove burrs 132 from component section 104. As such, a deburring process may be performed on component section 104 after supplemental section 106 is removed from unitary body 102 using a machining technique. Turning to FIG. 6, burrs 132 (shown in phantom) may be removed via the deburring process and/or using any suitable technique and/or system that may be configured to remove burrs 132. Performing the deburring process on component section 104 may also restore and/or reshape remaining portion 130 of transition conduit 124 to its original form, geometry, and/or shape prior to performing the removal process on unitary body 102 of component 100 (*see e.g.,* FIG. 3). Additionally, when performing the deburring process on component section 104, the work tool and/or system (e.g., deburring tool) that performs the deburring process may only contact, restore, and/or reshape remaining portion 130 of transition conduit 124 while removing burrs 132. As such, the configuration, geometry, and/or shape of opening 110 and/or passage 108 of component section 104 may be unchanged, unaltered, and/or may maintain the desired/built geometries. Removing burrs 132 that may extending into transition conduit 124 may ensure the passage 108/opening 110 of component section 104 may operate as intended when utilized for its purpose and/or may perform with desired operational parameter and characteristics.

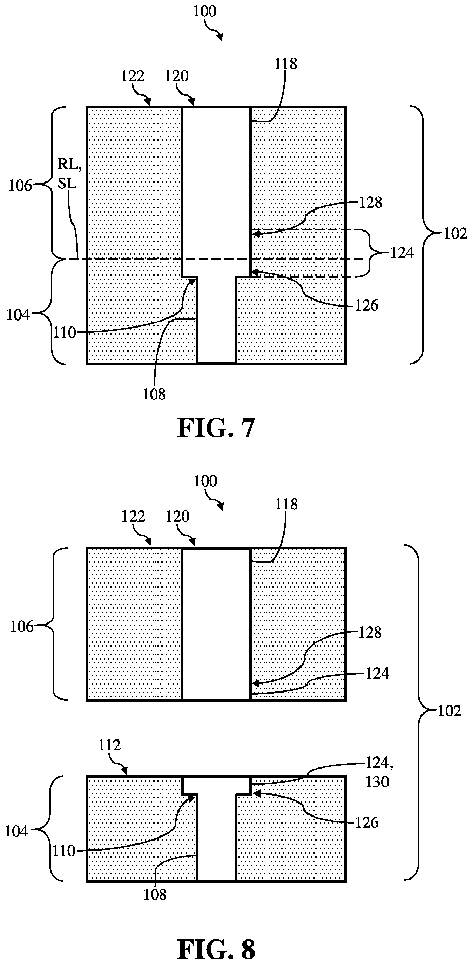

FIGs. 7-10 show additional non-limiting examples of unitary body 102 of component 100. More specifically, FIGs. 7-10 show front, cross-sectional views of a portion of unitary body 102 include integrally formed component section 104 and supplemental section 106 (*e.g.,* FIGs. 7 and 9), as well as cross-sectional views of supplemental section 106 removed from component section 104 (*e.g.,* FIGs. 8 and 10). It is understood that similarly numbered and/or named components may function in a substantially similar fashion. Redundant explanation of these components has been omitted for clarity.

In the non-limiting example shown in FIGs. 7 and 8, transition conduit 124 may be substantially uniform and/or linear in shape. That is, and distinct transition conduit 124 discussed herein with respect to FIGs. 1-6, transition conduit 124 may not be frusto-conical in shape and/or include a varying/converging dimensions. Rather, transition conduit 124 shown in FIGs. 7 and 8 may be substantially linear and include a single, uniform dimension (D2) between first end 126 and second end 128. Uniform, second dimension of transition conduit 124 extending between and fluidly coupling passage 108 and channel 118 may be larger than the first dimension (D1) of opening 110 and/or passage 108. When supplemental section 106 is removed from component section 104, as shown in FIG. 8, remaining portion 130 of transition conduit 124 may include or maintain the uniform, second dimension (D2) that may be larger than the first dimension (D1) of opening 110. As similarly discussed herein with respect to FIGs. 5 and 6, transition conduit 124, and more specifically remaining portion 130 of transition conduit 124, including the larger second dimension (D2) may prevent burrs 132 (*see,* FIG. 5) from obstructing passage 108/opening 110. Additionally, or alternatively, remaining portion 130 of transition conduit 124 including the uniform, second dimension (D2) may prevent passage 108/opening 110 from being undesirably reshaped or reconfigured by a tool or system (e.g., deburring tool) that may be used to remove burrs 132 extending into transition conduit 124 after removing supplemental section 106.

Turning to FIGs. 9 and 10, passage 108 may extend through component section 104 at an angle (α). More specifically, passage 108 extends at least partially through component section 104 at a non-perpendicular angle relative to "finished" surface 112 (*see,* FIG. 10) on component section 104 of unitary body 102. As similarly, discussed herein, once supplemental section 106 is removed from component section 104, "finished" surface 112 may expose angled or non-perpendicular passage 108 of component section 104.

Additionally, FIGs. 9 and 10 depict a non-limiting example where supplemental section 106 is not removed from component section 104 at the reference line (RL) and/or transition between component section 104 and supplemental section 106. That is, supplemental section 106 may be removed from component section 104 at the separation line (SL) that is distinct from the reference line (RL) indicating the transition between the two sections 104, 106 of unitary body 102. In the non-limiting example, the separation line (SL) may be positioned adjacent to and/or above the reference line (RL). As similarly discussed herein, separation line (SL) may still be positioned through transition conduit 124 formed, positioned, defined, and/or extending between component section 104 and supplemental section 106. However, distinct from the non-limiting examples discussed herein with respect to FIGs. 1-8, separation line (SL) shown in FIG. 9 may only be positioned through a portion of transition conduit 124 that is positioned, defined, and/or extends within supplemental section 106 of unitary body 102.

Turning to FIG. 10, where supplemental section 106 is removed at the separation line (SL) positioned adjacent to and/or above the reference line (RL), a portion of supplemental section 106 may remain with component section 104. That is, the final configuration formed from unitary body 102 of additively manufactured component 100 may include an unremoved or remaining portion 134 of supplemental section 106. In this non-limiting example, "finished" surface 112 may be formed by remaining portion 134 of supplemental section 106 of unitary body 102 that is not removed and/or remains integrally formed with component section 104. Exposing/defining "finished" surface 112 formed from remaining portion 134 of supplemental section 106, may also expose remaining portion 130 of transition conduit 124, passage 108, and opening 110 of component section 104, as similarly discussed herein.

FIGs. 11-13 show additional non-limiting examples of unitary body 202 of component 200. More specifically, FIGs. 11-13 show front, cross-sectional views of a portion of unitary body 202 include integrally formed component section 204 and supplemental section 206. In each of the non-limiting examples, and as discussed herein, component section 204 may include a plurality of passages 208A, 208B extending therein. It is understood that the number of passages 208 formed in component section 204 of unitary body 202 shown herein may be illustrative, and unitary body 202 of component 200 may include more or less passages 208 than those shown and discussed herein.

In the non-limiting example shown in FIG. 11, component section 204 may include a first passage 208A and a distinct, second passage 208B. First passage 208A may extend at least partially through component section 204, and may include first opening 210A having the first dimension (D1). First passage 208A may be substantially similar to passage 108 discussed herein with respect to FIGs. 1-6. Second passage 208B of unitary body 102 may extend at least partially through component section 204, adjacent first passage 208A. Second passage 208B may also include a second opening 210B having a third dimension (D3).

As shown in FIG. 11, supplemental section 206 may include a plurality of channels 218A, 218B that each correspond to one of the plurality of passages 208A, 208B formed in component section 204. That is, supplemental section 206 may be disposed, formed over, and/or may cover first opening 210A of first passage 208A and second opening 210B of second passage 208B, and may include a plurality of corresponding channels 2018A, 2018B extending therein. For example, supplemental section 206 may include a first channel 218A that is in fluid communication with first passage 208A. First channel 218A may include a first opening 220A formed through surface 222, and may be in fluid communication with first passage 208A via a first transition conduit 224A positioned between first channel 218A and first passage 208A. As similarly discussed herein first transition conduit 224A may extend, be formed, defined, and/or may be positioned between component section 204 and supplemental section 206 to fluidly couple first channel 218A and first passage 208A. As similarly discussed herein, first transition conduit 224A may include a frusto-conical shape, and the entirety of transition conduit 224A may include a larger dimension (e.g., D2) than the first dimension (D1) for first opening 210A of first passage 208A. Additionally, the difference in dimensions may increase as first transition conduit 224A transitions into first channel 218A and/or away from first opening 210A.

In the non-limiting example shown in FIG. 11, supplemental section 206 may also include a distinct, second channel 218B. Second channel 218B may extend at least partially through supplemental section 206, and may be in fluid communication with second passage 208B. That is, second channel 218B may extending at least partially through a portion of supplemental section 206 that is disposed over second passage 208B and may include opening 220B formed in surface 222. Second channel 218B may also be in fluid communication with second passage 208 extending at least partially through component section 204.

Additionally, and as shown in FIG. 11, unitary body 202 may include a second transition conduit 224B positioned within and/or extending between component section 204 and supplemental section 206. Section transition conduit 224 may extend between second passage 208B of component section 204 and second channel 218B of supplemental section 206 to fluidly couple second passage 208B and second channel 218B. In the non-limiting example shown in FIG. 11, and as similarly discussed herein with respect to FIGs. 7 and 8, second transition conduit 224B may include a substantially uniform fourth dimension (D4). The fourth dimension (D4) of second transition conduit 224B may be larger than the third dimension (D3) of second opening 210B of second passage 208B. Although shown as including a substantially uniform fourth dimension (D4), it is understood that second transition conduit 224B may alternatively be formed to include the frusto-conical shape (*see,* FIG. 12), where the entirety of second transition conduit 224B may include a larger dimension (e.g., D4) than the third dimension (D3) for second opening 210B of second passage 208B.

Turning to FIG. 12, unitary body 202 of component 200 may include similar features (e.g., passages, 208A, 208B, openings 210A, 210B, and/or transition conduits 224A, 224B) such as those shown and discussed herein with respect to FIG. 11. It is understood that similarly numbered and/or named components may function in a substantially similar fashion. Redundant explanation of these components has been omitted for clarity.

Distinct from FIG. 11, the non-limiting example of FIG. 12 shows supplemental section 206 including a single channel 218 extending therein. More specifically, supplemental section 206 of unitary body 202 may include a single channel 218 that may include a single opening 220 formed in and/or through surface 222. In the non-limiting example, single channel 218 may be in fluid communication with each of first passage 208A and second passage 208B extending at least partially through component section 204. Single channel 218 may also be in direct fluid communication with and/or fluidly coupled to each of first transition conduit 224A and second transition conduit 224B. As such, first transition conduit 224A may fluidly couple first passage 208A to single channel 218, and second transition conduit 224B may fluidly couple second passage 208B to single channel 218 as well.

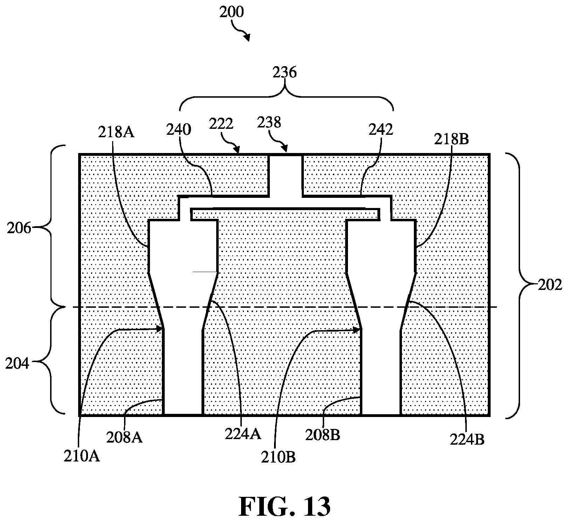

In the non-limiting example shown in FIG. 13, supplemental section 206 may include a manifold 236 formed therein. Manifold 236 of supplemental section 206 may be in fluid communication with each of first channel 218A and second channel 218B extending at least partially through supplemental section 206. As shown in FIG. 13, manifold 236 may include a single opening 238 formed in surface 222 of supplemental section 206. Single opening 238 may be in fluid communication with a plurality of branches 240, 242 of manifold 236. Each branch 240, 242 may correspond to and/or may be fluidly coupled to a channel 218A, 2018B of supplemental section 206. For example, a first branch 240 of manifold 236 may be fluidly coupled to first channel 218A, and a second branch 242 may be fluidly coupled to second channel 218B. As discussed herein, manifold 236 of supplemental section 206 may also a fluid to flow to and/or from passages 208A, 208B of component section 204 via channels 218A, 218B.

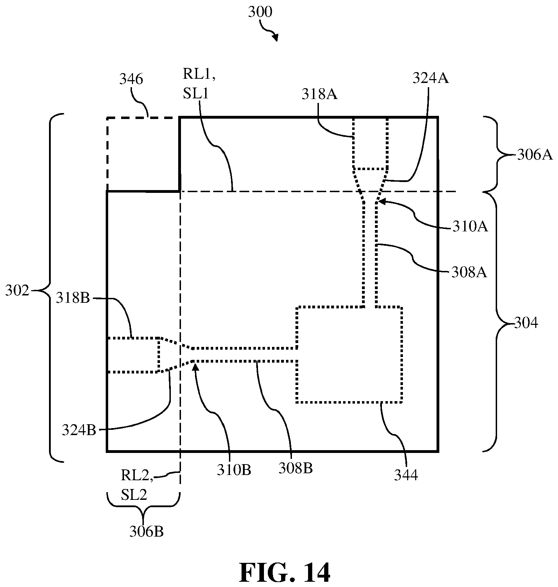

FIG. 14 shows a front view of component 300 including unitary body 302. In the non-limiting example, component section 304 unitary body 302 may include first passage 308A and second passage 308B extending therethrough, and in fluid communication and/or fluidly coupled to a cavity 344 formed therein. As shown, second passage 308B may extend at least partially through component section 304 at an angle (e.g., perpendicular) relative to first passage 308A. As such, and distinct form the non-limiting examples discussed herein with respect to FIGs. 11-13, second passage 308B may be exposed on a distinct "finished" surface than first passage 308A (e.g., "finished" surface 112), when component section 304 is in a final form and/or configuration for use.

As a result, unitary body 302 of component 300 may include a first supplemental section 306A and a distinct, second supplemental section 306B formed integral with component section 304. That is, first supplemental section 306A may be formed integral with component section 304, and may be disposed over and/or cover first passage 308A/first opening 310A. Unitary body 302 shown in FIG. 14 may include first channel 318A extending at least partially through first supplemental section 306A and in fluid communication with first passage 308A. As similarly discussed herein, unitary body 302 may also include first transition conduit 324A extending between and/or positioned within component section 304 and first supplemental section 306A. First transition conduit 324A may extend between first passage 308A of component section 304 and first channel 318A of first supplemental section 306A to fluidly couple first passage 308A and first channel 318A.

Second supplemental section 306B may be formed integral with a distinct portion of component section 304 of unitary body 302. That is, second supplemental section 306B may be formed integral with component section 304, and may be disposed over and/or cover second passage 308B/second opening 310B. As shown in FIG. 14, second supplemental section 306B of unitary body 302 may include second channel 318B extending at least partially through second supplemental section 306B. Second channel 318B may be in fluid communication with second passage 308B. In the non-limiting example, unitary body 302 may also include second transition conduit 324B extending between and/or positioned within component section 304 and second supplemental section 306B. Second transition conduit 324B may extend between second passage 308B of component section 304 and second channel 318B of second supplemental section 306B to fluidly couple second passage 308B and second channel 318B. As similarly discussed herein, each of first supplemental section 306A and second supplemental section 306B may be removed along respective separation lines (SL1, SL2) to form the final configuration of component 300 (e.g., component section 304) that may be utilized for its intended purpose.

Although shown as two distinct supplemental sections 306A, 306B, it is understood that the non-limiting example shown in FIG. 14 may include a single supplemental section 306 that may be disposed over and/or cover both first passage 308A and second passage 308B. For example, void 346 (shown in phantom) may be formed between first supplemental section 306A and second supplemental section 306B during the additive manufacturing build process for unitary body 302 to separate and/or distinguish between first supplemental section 306A and second supplemental section 306B. In another non-limiting example, void 346 shown in FIG. 14 may include additively manufactured material or build material that may bridge between, form, extend, and/or define first supplemental section 306A and second supplemental section 306B as a single, integral supplemental section of unitary body 302.

FIG. 15 shows non-limiting example processes for forming a component using an additive manufacturing process and/or system. Specifically, FIG. 15 is a flowchart depicting example processes for forming a component including a component section and a supplemental section. In some cases, the processes may be used to form components 100, 200, 300, as discussed herein with respect to FIGs. 1-14.

In process P1, a unitary body of the component may be additively manufactured or built. That is, the additive manufacturing system (AMS) may perform a build process (e.g., direct metal laser melting) to build a body unitary of the component. The unitary body of the component may be built to include various sections and at least one feature formed therein. For example, the additively manufactured unitary body may include a component section including at least one passage extending at least partially through the component section. The passage(s) may include an opening having a first dimension. In a non-limiting example, additively manufacturing the unitary body may include additively manufacturing the passage(s) at a non-perpendicular angle relative to a finished surface of the unitary body. The additively manufactured unitary body may also include a supplemental section formed integral with the component section. The supplemental section may be disposed over the passage(s) of the component section and may include a channel extending at least partially through the supplemental section. The channel of the supplemental section may be in fluid communication with the passage(s) of the component section. Additionally, the additively manufactured unitary body may include a transition condition positioned within and/or extending between the component section and the supplement section. The transition conduit may extend between the passage(s) of the component section and the channel of the supplemental section to fluidly couple the passage(s) and the channel.

The transition conduit may also be additively manufactured to include a second dimension that is larger than first dimension of the opening of the passage(s) of the component section. In a non-limiting example, the second dimension of the transition conduit may be substantially uniform in shape and/or dimension. In another non-limiting example, transition conduit may be additively manufactured in process P1 to be and/or to include a frusto-conical shape. The frusto-conical transition conduit may be additively manufactured to include a first end positioned directly adjacent and in directly fluid communication with the opening of the passage(s) extending in the component section. The first end of the frusto-conical transition conduit may have a third dimension that is larger than the first dimension of the opening of the passage(s) of the component section. The frusto-conical transition conduit may also be additively manufactured to include a second end positioned opposite the first end. The send end may be positioned directly adjacent and in direct fluid communication with the channel positioned in the supplemental section. The second end may also have a second dimension that is larger than the first dimension of the opening of the passage and the third dimension of the first end of the transition conduit.

In additional non-limiting examples, the unitary body may include a plurality of passages. More specifically, the additive manufacturing performed in process P1 may also include additively manufacturing a first passage extending at least partially through the component section. The first passage may include a first opening having the first dimension. Additionally, process P1 may also include additively manufacturing a second passage extending at least partially through the component section, adjacent the first passage. The second passage may include a second opening having a third dimension.

As a result of forming two (or more passages), the supplemental section may include at least one channel and/or the unitary body may include a plurality of transition conduits. Continuing the example above, process P1 may include additively manufacturing a second channel extending at least partially through the supplemental section and in fluid communication with the second passage. The supplemental section may be disposed over the first opening of the first passage and the second opening of the second passage. Additionally, process P1 may further include additively manufacturing a second transition conduit positioned within the component section and the supplemental section. The second transition conduit may extend between the second passage of the component section and the second channel of the supplemental section to fluidly couple the second passage and the second channel. In this non-limiting example, the (first) channel of the supplemental section is in fluid communication with the first passage via the (first) transition conduit, the second channel of the supplemental section is in fluid communication with the second passage via the second transition conduit.

In another non-limiting example where the component section includes a first passage and a second passage, process P1 may further include additively manufacturing a second supplemental section formed integral with the component section and disposed over the second opening of the second passage. The second supplemental section may be distinct form the (first) supplemental section and may include a second channel extending at least partially through the second supplemental section and in fluid communication with the second passage. Additionally in the non-limiting example, additively manufacturing the unitary body in process P1 may include additively manufacturing a second transition conduit positioned within the component section and the second supplemental section. The second transition conduit may extend between the second passage of the component section and the second channel of the second supplemental section to fluidly couple the second passage and the second channel.

In either non-limiting example where the component section includes a first passage and a second passage, and the supplemental section(s) include a first channel and a second channel, additively manufacturing the unitary body in process P1 may also include additively manufacturing a manifold in the supplemental section. The manifold additively manufactured in the unitary body of the component may be in direct fluid communication with the channel and the second channel of the supplemental section(s).

In process P2 (shown in phantom as optional), at least one post-build process may be performed on the component including the unitary body. Specifically, and subsequent to integrally forming and/or additively manufacturing (e.g., process PI) the component section and the supplemental section, one or more post-build processes may be performed on the unitary body of the component including the integrally formed component section and supplemental section. The post-build process(es) performed on the component including the unitary body may prepare the unitary body of the component to be used by a component, apparatus, and/or system for an intended purpose. Performing the at least one post-build process on the component including the unitary body may also include, for example, shot peening the unitary body, and/or recrystallizing the component including the unitary body.

In process P3, the supplemental section may be removed from the unitary body. That is, the supplemental section may be removed from the component section of the unitary body of the component. Removing the supplemental section from the component section of the additively manufactured unitary body may substantially expose, define, and/or form a "finished" surface of the component section for the unitary body. Additionally, removing supplemental section from the component section of the unitary body may also expose at least a remaining portion of the transition conduit and the passage(s) of the component section. The supplemental section may be removed by performing any now known or later developed cutting process, e.g., electro-discharge machining (EDM), cutting wheel, etc. For example, removing the supplemental section may include machining the supplemental section through the transition conduit to define the finished surface of the unitary body/the component section of the component. The finished surface may include the portion of the exposed/remaining transition conduit and the passage(s) of the component section. By removing/machining the supplemental section through the transition conduit, at least a portion of the transition conduit, including the second dimension that is larger than the first dimension of the opening/passage of the component section, may remain in and/or on the component section of the component.

In process P4 (shown in phantom as optional), additional post-build process(es) may be performed on the unitary body. Specifically, and subsequent to removing the supplemental section from the component section of the unitary body, additional post-build process(s) may be performed on the component section of the component to prepare the component section, and/or provide component section for its intended use. In a non-limiting example where only a shot peening process is performed in process P2, the component section may undergo a recrystallization process without the supplemental section. Additionally, or alternatively, a burr removal process may be performed subsequent to the removal of the supplemental section. For example, where the supplemental section is removed from the component section using a machining process, burrs may form on the "finished" surface. The burrs may extending from the remaining portion of the transition conduit and may extend at least partially into and/or adjacent the opening/the passage of the component section. As such, process P4 may include performing a burr removal process subsequent to removing the supplemental section from the component section of the unitary body to remove at least one burr extending into and/or from the remaining portion of the transition conduit.

Component 100, 200, 300 may be formed in a number of ways. In one embodiment, component 100, 200, 300 may be made by casting. However, as noted herein, additive manufacturing is particularly suited for manufacturing component 100, 200, 300 including a unitary body. As used herein, additive manufacturing (AM) may include any process of producing an object through the successive layering of material rather than the removal of material, which is the case with conventional processes. Additive manufacturing can create complex geometries without the use of any sort of tools, molds or fixtures, and with little or no waste material. Instead of machining components from solid billets of plastic or metal, much of which is cut away and discarded, the only material used in additive manufacturing is what is required to shape the part. Additive manufacturing processes may include but are not limited to: 3D printing, rapid prototyping (RP), direct digital manufacturing (DDM), binder jetting, selective laser melting (SLM) and direct metal laser melting (DMLM). In the current setting, DMLM or SLM have been found advantageous.

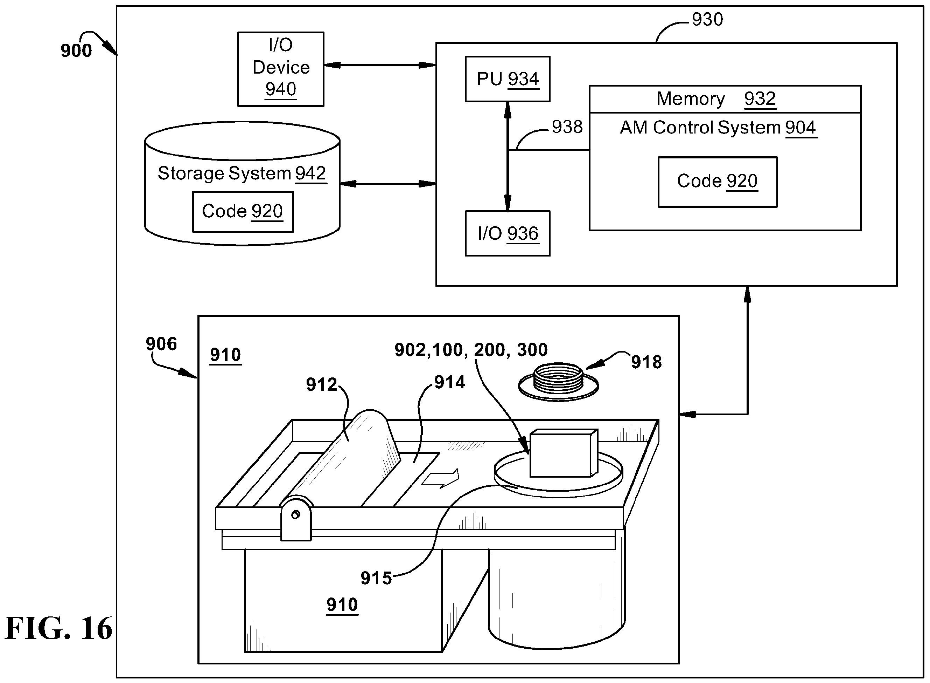

To illustrate an example of an additive manufacturing process, FIG. 16 shows a schematic/block view of an illustrative computerized additive manufacturing system 900 for generating an object 902. In this example, system 900 is arranged for DMLM. It is understood that the general teachings of the disclosure are equally applicable to other forms of additive manufacturing. Object 902 is illustrated as component 100, 200, 300 (*see,* FIGs. 1-14). AM system 900 generally includes a computerized additive manufacturing (AM) control system 904 and an AM printer 906. AM system 900, as will be described, executes code 920 that includes a set of computer-executable instructions defining component 100, 200, 300 to physically generate the object 902 using AM printer 906. Each AM process may use different raw materials in the form of, for example, fine-grain powder, liquid (e.g., polymers), sheet, etc., a stock of which may be held in a chamber 910 of AM printer 906. As illustrated, an applicator 912 may create a thin layer of raw material 914 spread out as the blank canvas on a build plate 915 of AM printer 906 from which each successive slice of the final object will be created. In other cases, applicator 912 may directly apply or print the next layer onto a previous layer as defined by code 920, e.g., where a metal binder jetting process is used. In the example shown, a laser or electron beam 916 fuses particles for each slice, as defined by code 920, but this may not be necessary where a quick setting liquid plastic/polymer is employed. Various parts of AM printer 906 may move to accommodate the addition of each new layer, e.g., a build platform 918 may lower and/or chamber 910 and/or applicator 912 may rise after each layer.

AM control system 904 is shown implemented on computer 930 as computer program code. To this extent, computer 930 is shown including a memory 932, a processor 934, an input/output (I/O) interface 936, and a bus 938. Further, computer 930 is shown in communication with an external I/O device/resource 940 and a storage system 942. In general, processor 934 executes computer program code, such as AM control system 904, that is stored in memory 932 and/or storage system 942 under instructions from code 920 representative of component 100, 200, 300, described herein. While executing computer program code, processor 934 can read and/or write data to/from memory 932, storage system 942, I/O device 940 and/or AM printer 906. Bus 938 provides a communication link between each of the components in computer 930, and I/O device 940 can comprise any device that enables a user to interact with computer 940 (e.g., keyboard, pointing device, display, etc.). Computer 930 is only representative of various possible combinations of hardware and software. For example, processor 934 may comprise a single processing unit, or be distributed across one or more processing units in one or more locations, e.g., on a client and server. Similarly, memory 932 and/or storage system 942 may reside at one or more physical locations. Memory 932 and/or storage system 942 can comprise any combination of various types of non-transitory computer readable storage medium including magnetic media, optical media, random access memory (RAM), read only memory (ROM), etc. Computer 930 can comprise any type of computing device such as a network server, a desktop computer, a laptop, a handheld device, a mobile phone, a pager, a personal data assistant, etc.

Additive manufacturing processes begin with a non-transitory computer readable storage medium (e.g., memory 932, storage system 942, etc.) storing code 920 representative of component 100, 200, 300. As noted, code 920 includes a set of computer-executable instructions defining outer electrode that can be used to physically generate the tip, upon execution of the code by system 900. For example, code 920 may include a precisely defined 3D model of component 100, 200, 300 and can be generated from any of a large variety of well-known computer aided design (CAD) software systems such as AutoCAD®, TurboCAD®, DesignCAD 3D Max, etc. In this regard, code 920 can take any now known or later developed file format. For example, code 920 may be in the Standard Tessellation Language (STL) which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 920 may be translated between different formats, converted into a set of data signals and transmitted, received as a set of data signals and converted to code, stored, etc., as necessary. Code 920 may be an input to system 900 and may come from a part designer, an intellectual property (IP) provider, a design company, the operator or owner of system 900, or from other sources. In any event, AM control system 904 executes code 920, dividing component 100, 200, 300 into a series of thin slices that it assembles using AM printer 906 in successive layers of liquid, powder, sheet or other material. In the DMLM example, each layer is melted to the exact geometry defined by code 920 and fused to the preceding layer. Subsequently, the component 100, 200, 300 may be exposed to any variety of finishing processes, e.g., those described herein for re-contouring or other minor machining, sealing, polishing, etc.

Technical effects of the disclosure include, e.g., providing a component formed from a unitary body that includes a component section, a supplemental section, and a transition conduit extending between and fluidly coupling a passage of the component section and a channel of the supplemental section. The transition conduit positioned between the component section and the supplemental section of the unitary body allow for the supplemental section to be removed from the component section without obstructing the passage of the component section and/or eliminates the risk of the passage being undesirably modified, when performing post-build processes (e.g., burr removal) on the component section.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

As discussed herein, various systems and components are described as "obtaining" data. It is understood that the corresponding data can be obtained using any solution. For example, the corresponding system/component can generate and/or be used to generate the data, retrieve the data from one or more data stores (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

The foregoing drawings show some of the processing associated according to several embodiments of this disclosure. In this regard, each drawing or block within a flow diagram of the drawings represents a process associated with embodiments of the method described. It should also be noted that in some alternative implementations, the acts noted in the drawings or blocks may occur out of the order noted in the figure or, for example, may in fact be executed substantially concurrently or in the reverse order, depending upon the act involved. Also, one of ordinary skill in the art will recognize that additional blocks that describe the processing may be added.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A component (200) comprising:
a unitary body (102, 202, 302) including:
a component section (104, 204, 304), the component section (104, 204, 304) including:
at least one passage (108) extending at least partially through the component section (104, 204, 304), the at least one passage (108) including an opening (110, 220B) having a first dimension;
a supplemental section (206) formed integral with the component section (104, 204, 304), the supplemental section (206) disposed over the at least one passage (108) of the component section (104, 204, 304) and including:
a channel (118, 2018B, 218A) extending at least partially through the supplemental section (206), the channel (118, 2018B, 218A) in fluid communication with the at least one passage (108) of the component section (104, 204, 304); and
a transition conduit (124, 224A) positioned within the component section (104, 204, 304) and the supplemental section (206), the transition conduit (124, 224A) extending between the at least one passage (108) of the component section (104, 204, 304) and the channel (118, 2018B, 218A) of the supplemental section (206) to fluidly couple the at least one passage (108) and the channel (118, 2018B, 218A).

2. The component (200) of claim 1, wherein the transition conduit (124, 224A) includes a second dimension that is larger than the first dimension of the opening (110, 220B) of the at least one passage (108) of the component section (104, 204, 304).

3. The component (200) of claim 2, wherein the at least one passage (108) includes:
a first passage (208A) extending at least partially through the component section (104, 204, 304), the first passage (208A) including a first opening (220A) having the first dimension,
wherein the channel (118, 2018B, 218A) of the supplemental section (206) is in fluid communication with the first passage (208A); and
a second passage (208, 208B) extending at least partially through the component section (104, 204, 304), the second passage (208, 208B) including a second opening (210B) having a third dimension.

4. The component (200) of claim 3, wherein the supplemental section (206) is disposed over the second opening (210B) of the second passage (208, 208B), and the supplemental section (206) further includes:
a second channel (218B, 318B) extending at least partially through the supplemental section (206) and in fluid communication with the second passage (208, 208B).

5. The component (200) of claim 4, further comprising:
a second transition conduit (224B, 324B) positioned within the component section (104, 204, 304) and the supplemental section (206), the second transition conduit (224B, 324B) extending between the second passage (208, 208B) of the component section (104, 204, 304) and the second channel (218B, 318B) of the supplemental section (206) to fluidly couple the second passage (208, 208B) and the second channel (218B, 318B),
wherein the second transition conduit (224B, 324B) includes a substantially uniform fourth dimension, the fourth dimension greater than the third dimension of the second opening (210B) of the second passage (208, 208B).

6. The component (200) of claim 4, wherein the supplemental section (206) further includes a manifold (236) in fluid communication with the channel (118, 2018B, 218A) and the second channel (218B, 318B).

7. The component (200) of claim 3, further comprising:
a second supplemental section (306B) formed integral with the component section (104, 204, 304) and disposed over the second opening (210B) of the second passage (208, 208B), the second supplemental section (306B) including:
a second channel (218B, 318B) extending at least partially through the second supplemental section (306B) and in fluid communication with the second passage (208, 208B).

8. The component (200) of claim 7, further comprising:
a second transition conduit (224B, 324B) positioned within the component section (104, 204, 304) and the second supplemental section (306B), the second transition conduit (224B, 324B) extending between the second passage (208, 208B) of the component section (104, 204, 304) and the second channel (218B, 318B) of the second supplemental section (306B) to fluidly couple the second passage (208, 208B) and the second channel (218B, 318B).

9. The component (200) of claim 2, wherein the transition conduit (124, 224A) is frusto-conical and includes:
a first end (126) positioned directly adjacent and in direct fluid communication with the opening (110, 220B) of the at least one passage (108), the first end (126) having a third dimension that is larger than the first dimension of the opening (110, 220B) of the at least one passage (108), and
a second end (128) positioned opposite the first end (126), the second end (128) positioned directly adjacent and in direct fluid communication with the channel (118, 2018B, 218A) positioned in the supplemental section (206),
wherein the second end (128) has the second dimension that is larger than:
the first dimension of the opening (110, 220B) of the at least one passage (108), and
the third dimension of the first end (126) of the transition conduit (124, 224A).

10. The component (200) of claim 1, wherein the at least one passage (108) extends at least partially through the component section (104, 204, 304) at a non-perpendicular angle relative to a finished surface (20, 112, 122, 222) of the unitary body (102, 202, 302), the finished surface (20, 112, 122, 222) of the unitary body (102, 202, 302) exposing the at least one passage (108).

11. A method comprising:
additively manufacturing a unitary body (102, 202, 302) of a component (200), the unitary body (102, 202, 302) including:
a component section (104, 204, 304), the component section (104, 204, 304) including at least one passage (108) extending at least partially through the component section (104, 204, 304), the at least one passage (108) including an opening (110, 220B) having a first dimension;
a supplemental section (206) formed integral with the component section (104, 204, 304), the supplemental section (206) disposed over the at least one passage (108) of the component section (104, 204, 304) and including a channel (118, 2018B, 218A) extending at least partially through the supplemental section (206), the channel (118, 2018B, 218A) in fluid communication with the at least one passage (108) of the component (200) section; and
a transition conduit (124, 224A) positioned within the component section (104, 204, 304) and the supplemental section (206), the transition conduit (124, 224A) extending between the at least one passage (108) of the component section (104, 204, 304) and the channel (118, 2018B, 218A) of the supplemental section (206) to fluidly couple the at least one passage (108) and the channel (118, 2018B, 218A);
performing at least one post-build process on the component (200) including the unitary body (102, 202, 302); and
removing the supplemental section (206) from the component section (104, 204, 304) of the unitary body (102, 202, 302) to expose a portion of the transition conduit (124, 224A) and the at least one passage (108) of the component section (104, 204, 304).

12. The method of claim 11, wherein the transition conduit (124, 224A) includes a second dimension that is larger than the first dimension of the opening (110, 220B) of the at least one passage (108) of the component section (104, 204, 304).

13. The method of claim 12, wherein the transition conduit (124, 224A) is frusto-conical and includes:
a first end (126) positioned directly adjacent and in direct fluid communication with the opening (110, 220B) of the at least one passage (108), the first end (126) having a third dimension that is larger than the first dimension of the opening (110, 220B) of the at least one passage (108), and
a second end (128) positioned opposite the first end (126), the second end (128) positioned directly adjacent and in direct fluid communication with the channel (118, 2018B, 218A) positioned in the supplemental section (206),
wherein the second end (128) has the second dimension that is larger than:
the first dimension of the opening (110, 220B) of the at least one passage (108),
the third dimension of the first end (126) of the transition conduit (124, 224A).

14. The method of claim 11, wherein removing the supplemental section (206) from the component section (104, 204, 304) of the unitary body (102, 202, 302) further includes:
machining the supplemental section (206) through the transition conduit (124, 224A) to define a finished surface (20, 112, 122, 222) of the unitary body (102, 202, 302) of the component (200), the finished surface (20, 112, 122, 222) including the portion of the exposed transition conduit (124, 224A) and the at least one passage (108) of the component section (104, 204, 304).

15. The method of claim 14, wherein additively manufacturing the unitary body (102, 202, 302) further including:
additively manufacturing the at least one passage (108) at a non-perpendicular angle relative to the finished surface (20, 112, 122, 222) of the unitary body (102, 202, 302).
